# EUROPÄISCHE PATENTSCHRIFT

(11) **EP 3 024 608 B1**
(45) Veröffentlichungstag und Bekanntmachung des Hinweises auf die Patenterteilung: **01.05.2019**
(21) Anmeldenummer: 14742235.6
(22) Anmeldetag: 24.07.2014
(51) Int. Cl.: B22C 9/10, B29C 67/00

(54) **SALZKERNE UND GENERATIVE FERTIGUNGSVERFAHREN ZUR HERSTELLUNG VON SALZKERNEN**
SALT CORES AND GENERATIVE PRODUCTION METHODS FOR PRODUCING SALT CORES
NOYAUX DE SEL ET PROCÉDÉS DE FABRICATION ADDITIVE POUR RÉALISER DES NOYAUX DE SEL

(30) Priorität: 24.07.2013 DE 102013214465
(43) Veröffentlichungstag der Anmeldung: 01.06.2016
(73) Patentinhaber: Emil Müller GmbH, 91452 Wilhermsdorf (DE)
(72) Erfinder: HARTIG, Thorsten, 90617 Puschendorf (DE)
(74) Vertreter: Fehrenbacher, Eckhard Anton
(86) Internationale Anmeldenummer: PCT/EP2014/065932
(87) Internationale Veröffentlichungsnummer: WO 2015/011232

(56) Entgegenhaltungen:
- DE-A1-102007 023 152
- DE-A1-102011 076 905
- DE-B3-102005 019 699
- KAMITANI, T., YAMADA, O., MARUTANI, Y.: "A method of fabricating evaporative models by selective laser melting", THE REVIEW OF LASER ENGINEERING, Bd. 29, Nr. 8, 2001, Seiten 522-526, XP002730581,

## Beschreibung

Die Erfindung betrifft Salzkerne als Hohlraumplatzhalter in Gussteilen sowie generative Fertigungsverfahren zur Herstellung solcher Salzkerne. Insbesondere betrifft die Erfindung Salzkerne, die mittels selektiven Laserschmelzens hergestellt werden.

Das bevorzugte Einsatzgebiet für Salzkerne sind sämtliche Gießverfahren für Leichtmetalle und Buntmetalle, Herstellverfahren für Kunststoffe und/oder kohlefaser- und glasfaserverstärkte Bauteile. Der Begriff "Gussteil" soll daher im Rahmen dieser Erfindung nicht nur metallische Gussteile umfassen, sondern grundsätzlich auch alle Formteile betreffen, die mit Hilfe von Kernen gegossen oder geformt werden. Insbesondere Kunststoffformteile, die beispielsweise mittels Spritzgießens hergestellt werden, sollen ebenfalls von diesem Begriff umfasst sein.

Bei vielen durch Gießen hergestellten Produkten ist es erforderlich Hohlräume im Inneren oder Hinterschneidungen im Außenbereich zu erzeugen. Bei den drucklosen Verfahren, wie beispielsweise dem Schwerkraftgießen, wird ein Kern aus verfestigtem Sand oder Salz innerhalb der Form positioniert und mit Metallschmelze umgossen.

Bei druckbeaufschlagten Gießverfahren besteht ein Hauptproblem darin, einen druckfesten Kern herzustellen. Dieser Kern muss sowohl druckfest, als auch nach dem Erstarren und Abkühlen des Gussteils leicht zu entfernen sein. Durch den hohen allseitigen Druck werden die Kerne in Abhängigkeit von der Porosität mehr oder weniger stark komprimiert. Dies kann zu einem Versatz der Kerne im Gussteil bzw. zum Bruch der Kerne führen.

Des Weiteren verursacht die vorhandene Porosität eine raue Oberfläche im Gussteil, weil die Schmelze die Oberfläche des Kerns penetriert und seine Porosität abbildet. Dies kann bis dato auch durch das Aufbringen von Schlichten nicht gänzlich verhindert werden. Erwünscht ist i. A. eine möglichst glatte Oberfläche der Kontur nach dem Ausspülen der Kerne aus dem Gussteil. Dies kann mit den erfindungsgemäßen Kernen erreicht werden.

Reine schmelzgegossenen Kerne , die glatte Oberflächen im Gussteil ermöglichen würden, sind im Gießereiwesen seit Jahrzehnten im Einsatz. Eine breite Anwendung ist aber aufgrund der auftretenden Schwindung der schmelzgegossenen Kerne beim Erkalten in der Form nicht möglich. Die Schwindung liegt im Bereich von 3 bis 8% und führt bei Kernen mit komplexer Geometrie häufig zur Rissbildung. Aufgrund dieser Schrumpfungsproblematik sind lediglich Kerne mit geringer Komplexität realisierbar.

Die Herstellung gesinterter Kerne mit komplexen Geometrien ist nicht möglich und nur durch nachgelagerte Prozessschritte möglich.

Kamitani et al, The Review of Laser Engineering, Bd 29, 2001, S. 22-526 offenbart eine evaporative Gussform zur Herstellung von Gussteilen, die durch selektives Lasersintern einer Mischung aus exothermisch reaktiven Material und Salz hergestellt wird.

DE 10 2005 019699 B3 offenbart ein 3D-Druckverfahren zur Herstellung von Salzkernen aus einer Mischung aus NaCl und MgSO₄, wobei auf Bindemittel verzichtet wird, um ein Ausgasen des Bindemittels zu verhindern.

DE 10 2001 076905 schlägt Salzkerne als Hohlraumplatzhalter vor, die durch ein Infiltrat stabilisiert werden.

DE 10 2007 023152 A1 beschreibt ein Verfahren zur Herstellung eines Gussteils über eine Negativform.

Aufgabe der Erfindung ist die Vermeidung der genannten Nachteile, insbesondere die Bereitstellung von Salzkernen mit komplexen Geometrien, insbesondere mit Hinterschneidungen, sowie die Bereitstellung eines Verfahrens zur Herstellung solcher Kerne. Eine weitere Aufgabe der Erfindung besteht in der Bereitstellung von Salzkernen, die eine hohe Oberflächengüte ohne aufwändige Nachbehandlung aufweisen.

Diese Aufgabe wird durch einen Salzkern gemäß Anspruch 1 und durch ein Verfahren zur Herstellung von Salzkernen nach Anspruch 7 gelöst. Vorteilhafte Weiterbildungen des Gegenstands der Erfindung sind den Unteransprüchen zu entnehmen.

Demgemäß weist ein erfindungsgemäßer Salzkern zur Herstellung von Gussteilen einen schichtweisen Aufbau auf, wobei der schichtweise Aufbau aus Schichten von geschmolzenem und wieder erstarrtem Salz besteht.

Erfindungsgemäß wird ein solcher Salzkern mit einem schichtweisen Aufbau durch ein generatives Fertigungsverfahren hergestellt.

Gemäß einer besonders bevorzugten Ausführungsform der Erfindung besteht der Salzkern aus wasserlöslichen Materialien, im Wesentlichen aus wasserlöslichem Salz. Dies hat den Vorteil, dass ein komplex gestalteter Kern, beispielsweise mit Hinterschneidungen oder Hohlräumen rückstandsfrei durch Ausspülen aus dem Gussteil entfernt werden kann.

Der erfindungsgemäße Salzkern und das Verfahren zur Herstellung unterscheiden sich von aus dem Stand der Technik bekannten Salzkernen dadurch, dass die Salzkerne ohne die Verwendung von Urformwerkzeugen hergestellt werden können.

Gemäß einer bevorzugten Variante des Verfahrens wird aus einem Salz und optional weiteren Salzen und Zuschlagstoffen ein Formstoff oder eine Formstoffmischung gebildet.

Besonders bevorzugt werden die Salzkerne durch generative Fertigungsverfahren, insbesondere mittels selektiven Schmelzens von Salzkristallen durch einen Laser (selektives Laserschmelzen), hergestellt.

Gemäß einer bevorzugten Ausführungsform der Erfindung kann der Salzkern hohl gestaltet sein. Unter einem hohlen Salzkern wird erfindungsgemäß verstanden, dass der Kern eine feste äußere Schale besitzt, die die Form des Kerns bestimmt. Das Innere des Kerns kann leer oder mit nicht speziell verfestigtem Formstoff gefüllt sein.

Besonders bevorzugt besteht der Salzkern aus einer selektiv-lasergeschmolzenen Randschale mit beliebiger Stärke, währenddessen der von der verfestigten Randschale umschlossene, innere Formstoffanteil nicht verschmolzen ist.

Gemäß einer besonderen Ausführungsform, kann der, durch laserschmelzen hergestellte, Salzkern zum Schließen oberflächennaher, offener Poren mit einer wasserlöslichen Schlichte überzogen oder mit einer Salzschmelze infiltriert werden.

Es wurde gefunden, dass es möglich ist, eine Vielzahl von Funktionsteilen oder Bauteilen, die zur Herstellung von beispielsweise Getrieben, Antriebselementen, Pumpen, Kanälen oder Rohrsystemen dienen, nicht erst nach Herstellung eines Hohlformkörpers in diesen einzubringen und zu montieren. Diese Funktionsteile oder Bauteile können in einen wasserlöslichen Salzkern eingebracht werden, der anschließend in einem Gießverfahren mit Metall oder Kunststoff umgossen wird. Nachfolgend wird der wasserlösliche Salzkern ausgespült und die Funktionsteile liegen bereits in der gewünschten Position und Funktion im Hohlformkörper vor.

Demnach zeichnet sich ein solcher Salzkern durch mindestens ein Bauteil, insbesondere ausgewählt aus Zahnrädern, Getriebeteilen, Achselementen oder Antriebselementen aus, die der Salzkern so in formschlüssiger Verbindung enthält, dass beim Umguss des Bauteils kein Hintergießen mit Schmelze und keine Flitterbildung auftritt. Das mindestens eine Bauteil ist vom Salzkern weitgehend umschlossen, so dass in der Regel nur die Achsen oder Achslager aus dem Salzkern hervorragen oder an dessen Oberfläche anliegen.

Gemäß einer bevorzugten Ausführungsform, besteht der verwendete Formstoff aus hochreinem Salz, insbesondere mit einer pharmazeutischen Qualität. Die erfindungsgemäßen Salzkerne weisen einen NaCI-Gehalt von mehr als 99 Gew.-% auf, bevorzugt von mehr als 99.5 Gew.-% NaCl.

Durch den schichtenweisen Aufbau ist eine hohe Komplexität der Form/des Kerns realisierbar. Auch hohle Strukturen können hergestellt werden.

Im Folgenden sind einige Vorteile eines solchen Verfahrens zusammengestellt:
- Für das selektive Laserschmelzen der Salze können kostengünstige und biologisch/ökologisch unbedenkliche Salze verwendet werden.
- Das Schmelzen der Salze erfolgt durch eine computer-gesteuerte, selektive Erhitzung mittels eines Lasers, was zu dünnen, glatten Salzschichten führt.Für jede neu aufgetragene Formstoffschicht muss der selektive Schmelzvorgang wiederholt werden. Durch die Erstarrung des Salzes entsteht eine Verbindung zwischen den einzelnen aufgetragenen Salzschichten.
- Durch den schichtenweisen Aufbau und das lokale Schmelzen der Salze mit einem Laser entsteht kein Verzug am Bauteil. Da nur kleine Bereiche aufgeheizt und geschmolzen werden, kann der Volumenkontraktion beim Erstarren entgegengewirkt werden.
- Die Porosität/Gasdurchlässigkeit der erzeugten Kerne/Formen kann gezielt eingestellt werden, weil bei diesem Verfahren eine hohe Geometriefreiheit besteht.
- Ein einfache und rückstandsfreie Entfernung der Kerne ist möglich, da die Kerne ausschließlich aus wasserlöslichen Komponenten bestehen.
- Es kommt nicht zum Ausgasen der Kerne beim Guss, da keine Binder verwendet werden.
- Flexibilität und Geschwindigkeit bei Kleinserien und Prototypen
- Keine Werkzeugkosten, abgesehen vom Laserdrucker

Als Formstoff wird ein kristallines Salz verwendet, das bevorzugt eine unimodale, aber auch bi- oder multimodale Korngrößenverteilung aufweisen kann. Eine bi- oder multimodale Korngrößenverteilung kann vorteilhaft in Hinblick auf eine besonders dichte Packung der Kristalle im Formstoff sein. Die in den erfindungsgemäßen Salzkernen vorhandene Porosität kann damit variiert werden. Die erfindungsgemäßen Salzkerne weisen, insbesondere wenn sie mittels selektiven Laserschmelzens hergestellt wurden, eine Restporosität von weniger als 5 %, bevorzugt von weniger als 3 % und insbesondere bevorzugt von weniger als 1 % auf, bezogen auf das Gesamtvolumen des Kerns.

Wesentliche Auswahlkriterien für die zu verwendenden Salze sind deren möglichst geringe Giftigkeit, die Löslichkeit und der Schmelzpunkt. Um einen niedrigen Schmelzpunkt zu erhalten, werden beim selektiven Laserschmelzen bevorzugt eutektische Salzmischungen verwendet, deren Schmelzpunkt niedriger liegt als die Schmelzpunkte der Einzelsalze.

Als Salze können Chloride, Sulfate, Phosphate oder Nitrate der Alkali -, Erdalkali- oder der Nebengruppenelemente oder Mischungen dieser Salze, insbesondere Natriumchlorid, Kaliumchlorid, Magnesiumchlorid und/oder Kaliumsulfat, Magnesiumsulfat, Ammoniumsulfat oder Natriumsulfat eingesetzt werden.

Gemäß einer besonders bevorzugten Ausführungsform umfasst die Formstoffmischung eine Zusammensetzung von Natriumsulfat und Natriumchlorid oder von Natriumkarbonat und Natriumchlorid oder eine Mischung aus diesen drei Salzen. Diese Salze sind ungiftig und ökonomisch sinnvoll.

Bevorzugt wird aus dem Formstoff eine schmelzflüssigen Phase erzeugt, wobei die schmelzflüssige Phase insbesondere eine Na₂SO₄- und/oder eine Na₂CO₃- und/oder eine NaCI-umfassenden Schmelze, und insbesondere eine eutektisch zusammengesetzte Na₂SO₄-NaCl- oder eine eutektisch zusammengesetzte Na₂CO₃-NaCI-Schmelze ist.

Ein Salzkern nach dieser bevorzugten Ausführungsform der Erfindung umfasst oder besteht daher aus Na₂SO₄ und/oder Na₂CO₃- und/oder NaCl und insbesondere aus einer eutektischen Mischung aus Na₂SO₄-NaCl oder einer eutektischen Mischung aus Na₂CO₃-NaCl.

Ein erfindungsgemäßes Verfahren zur Herstellung solcher Salzkerne zeichnet sich dadurch aus, dass die Salzformen oder Salzkerne schichtweise, insbesondere durch lokales Aufschmelzen eines Formstoffs durch einen Laser, erzeugt werden.

Weiterhin zeichnet sich das erfindungsgemäße Verfahren dadurch aus, dass der Formstoff ein pulverförmiges, körniges oder granuliertes Salz oder eine Mischung von Salzen, mit runden, unregelmäßig geformten oder eckigen, splittrigen Kristallen ist.

Gemäß einer bevorzugten Ausführungsform der Erfindung liegt die Korngröße des kristallinen Salzes im Bereich von 0,01 mm bis 2 mm. Besonders bevorzugte Korngrößenbereiche liegen zwischen 0,01 und 0,29 mm, zwischen 0,3 und 1,3 mm und/oder zwischen 1,31 und 2,0 mm, wobei die ersten beiden Fraktionen als eher feinkörniges Salz und die letzte Fraktion als eher grobkörniges Salz in multimodal zusammengesetzten Mischungen Verwendung finden können.

Der generativ hergestellte Salzkern kann zusätzlich noch mit einer wasserlöslichen Salzschmelze infiltriert werden.

## Patentansprüche

1. Salzkern als Hohlraumplatzhalter zur Herstellung von Gussteilen, wobei der Salzkern einen schichtweisen Aufbau aufweist, wobei der schichtweise Aufbau Schichten von geschmolzenem und wieder erstarrtem Salz umfasst, **dadurch gekennzeichnet, dass** der Salzkern eine feste äußere Schale aufweist, die die Form des Kerns bestimmt und dass der Salzkern eine Restporosität von weniger als 5% bezogen auf das Gesamtvolumen des Salzkerns aufweist.

2. Salzkern nach Anspruch 1, **dadurch gekennzeichnet, dass** der Salzkern wasserlöslich ist.

3. Salzkern nach einem der vorstehenden Ansprüche, **dadurch gekennzeichnet, dass** der Salzkern eine Restporosität von weniger als 3% bezogen auf das Gesamtvolumen des Salzkerns aufweist.

4. Salzkern nach einem der vorstehenden Ansprüche, **dadurch gekennzeichnet, dass** der Salzkern Na₂SO₄ und/oder Na₂CO₃- und/oder NaCl umfasst und insbesondere aus einer eutektischen Mischung aus Na₂SO₄-NaCl oder einer eutektischen Mischung aus Na₂CO₃-NaCl besteht.

5. Salzkern nach einem der vorstehenden Ansprüche, **dadurch gekennzeichnet, dass** der Salzkern aus mindestens 99 Gew.-% NaCl besteht, bevorzugt aus mehr als 99.5 Gew.-% NaCl besteht.

6. Salzkern nach einem der vorstehenden Ansprüche, **dadurch gekennzeichnet, dass** der Salzkern mindestens ein Bauteil, insbesondere ausgewählt aus Zahnrädern, Getriebeteilen, Achselementen oder Antriebselementen in formschlüssiger Verbindung umfasst, wobei das mindestens eine Bauteil vom Salzkern weitgehend umschlossen ist, so dass beim Umguss des Bauteils kein Hintergießen mit Schmelze und keine Flitterbildung auftreten.

7. Verfahren zur Herstellung eines Salzkerns als Hohlraumplatzhalter nach einem der Ansprüche 1 bis 6, **dadurch gekennzeichnet, dass** der Salzkern mit einem generativen Fertigungsverfahren, insbesondere mittels selektiven Laserschmelzens, hergestellt wird.

8. Verfahren nach Anspruch 7, **dadurch gekennzeichnet, dass** der Salzkern schichtweise, insbesondere durch lokales Aufschmelzen eines Salzumfassenden Formstoffs durch einen Laser, erzeugt wird.

9. Verfahren nach Anspruch 7 oder 8, **dadurch gekennzeichnet, dass** als Formstoff ein kristallines Salz, bevorzugt in einer unimodalen, einer bimodalen oder einer multimodalen Korngrößenverteilung verwendet wird.

10. Verfahren nach einem der Ansprüche 7 bis 9, **dadurch gekennzeichnet, dass** der aus dem Formstoff eine schmelzflüssigen Phase erzeugt wird, wobei die schmelzflüssige Phase insbesondere eine Na₂SO₄- und/oder einer Na₂CO₃- und/oder einer NaCI-umfassenden Schmelze, und insbesondere eine eutektisch zusammengesetzte Na₂SO₄-NaCl- oder eine eutektisch zusammengesetzte Na₂CO₃-NaCl-Schmelze ist.

11. Verfahren nach einem der Ansprüche 7 bis 10, **dadurch gekennzeichnet, dass** in den Salzkern mindestens ein Bauteil, insbesondere ausgewählt aus Zahnrädern, Getriebeteilen, Achselementen oder Antriebselementen so in formschlüssiger Verbindung integriert wird, dass das mindestens eine Bauteil vom Salzkern weitgehend umschlossen wird, so dass beim Umguss des Salzkerns kein Hintergießen des Bauteils mit Schmelze und keine Flitterbildung auftreten.

12. Verfahren nach einem der Ansprüche 7 bis 11, **dadurch gekennzeichnet, dass** der generativ hergestellte Salzkern mit einer wasserlöslichen Salzschmelze infiltriert wird.

## Claims

1. Salt core as a cavity retainer for producing castings, the salt core having a layered design, the layered design comprising layers of salt that has been melted and re-solidified, **characterized in that** the salt core has a solid outer shell that defines the shape of the core and **in that** the salt core has a residual porosity of less than 5% based on the total volume of the salt core.

2. Salt core according to claim 1, **characterized in that** the salt core is water-soluble.

3. Salt core according to either of the preceding claims, **characterized in that** the salt core has a residual porosity of less than 3% based on the total volume of the salt core.

4. Salt core according to any of the preceding claims, **characterized in that** the salt core comprises Na₂SO₄ and/or Na₂CO₃ and/or NaCl and in particular consists of a eutectic mixture of Na₂SO₄-NaCl or a eutectic mixture of Na₂CO₃-NaCl.

5. Salt core according to any of the preceding claims, **characterized in that** the salt core consists of at least 99 wt.% NaCl, preferably of more than 99.5 wt.% NaCl.

6. Salt core according to any of the preceding claims, **characterized in that** the salt core comprises at least one component, in particular selected from gears, transmission components, axle elements or drive elements in form-fitting connection, the at least one component of the salt core being largely enclosed such that no back-casting with melt and no flake formation take place when the component is recast.

7. Method for producing a salt core as a cavity retainer according to any of claims 1 to 6, **characterized in that** the salt core is produced by means of an additive manufacturing process, in particular by means of selective laser melting.

8. Method according to claim 7, **characterized in that** the salt core is produced in layers, in particularly by locally melting a salt-comprising mold material by means of a laser.

9. Method according to either claim 7 or claim 8, **characterized in that** a crystalline salt is used as a mold material, preferably in a unimodal, bimodal or multimodal particle size distribution.

10. Method according to any of claims 7 to 9, **characterized in that** a molten phase is produced from the mold material, the molten phase being in particular a melt that comprises Na₂SO₄ and/or Na₂CO₃ and/or NaCl, and in particular is a eutectically composed Na₂SO₄-NaCl melt or a eutectically composed Na₂CO₃-NaCl melt.

11. Method according to any of claims 7 to 10, **characterized in that** at least one component, in particular selected from gears, transmission components, axle elements or drive elements is integrated in the salt core in form-fitting connection in such a way that the at least one component is largely enclosed by the salt core such that no back-casting of the component with melt and no flake formation take place when the salt core is recast.

12. Method according to any of claims 7 to 11, **characterized in that** the additively produced salt core is infiltrated with a water-soluble salt melt.

## Revendications

1. Noyau de sel comme élément de remplissage de cavité pour la fabrication de pièces coulées, le noyau de sel comportant une structure en couches, la structure en couches comprenant des couches de sel fondu et de nouveau solidifié, **caractérisé en ce que** le noyau de sel comporte une enveloppe extérieure solide, qui détermine la forme du noyau, et **en ce que** le noyau de sel comporte une porosité résiduelle inférieure à 5 % par rapport au volume total du noyau de sel.

2. Noyau de sel selon la revendication 1, **caractérisé en ce que** le noyau de sel est soluble dans l'eau.

3. Noyau de sel selon l'une des revendications précédentes, **caractérisé en ce que** le noyau de sel comporte une porosité résiduelle inférieure à 3 % par rapport au volume total du noyau de sel.

4. Noyau de sel selon l'une des revendications précédentes, **caractérisé en ce que** le noyau de sel comprend Na₂SO₄ et/ou Na₂CO₃- et/ou NaCl et en particulier est constitué d'un mélange eutectique de Na₂SO₄-NaCl ou d'un mélange eutectique de Na₂CO₃-NaCl.

5. Noyau de sel selon l'une des revendications précédentes, **caractérisé en ce que** le noyau de sel est constitué d'au moins 99 % en poids de NaCl, de préférence de plus de 99,5 % en poids de NaCl.

6. Noyau de sel selon l'une des revendications précédentes, **caractérisé en ce que** le noyau de sel comprend au moins un composant, en particulier choisi parmi des roues dentées, des pièces de transmission, des éléments d'axe ou des éléments d'entraînement par liaison par complémentarité de forme, l'au moins un composant étant entouré en grande partie du noyau de sel de telle sorte qu'il ne se produit pas de coulage ultérieur avec fusion ni de formation de paillettes lors du coulage du composant.

7. Procédé de fabrication d'un noyau de sel comme élément de remplissage de cavité selon l'une des revendications 1 à 6, **caractérisé en ce que** le noyau de sel est fabriqué avec un procédé de fabrication génératif, en particulier au moyen de la fusion sélective par laser.

8. Procédé selon la revendication 7, **caractérisé en ce que** le noyau de sel est produit par couches, en particulier par fusion locale d'une substance à couler comprenant du sel par un laser.

9. Procédé selon la revendication 7 ou la revendication 8, **caractérisé en ce qu'**un sel cristallin est utilisé comme substance à mouler, de préférence selon une répartition granulométrique unimodale, bimodale ou multimodale.

10. Procédé selon l'une des revendications 7 à 9, **caractérisé en ce que** l'une phase en fusion constituée de la substance à mouler est produite, la phase en fusion étant en particulier une matière fondue comprenant Na₂SO₄- et/ou une matière fondue comprenant Na₂CO₃- et/ou une matière fondue comprenant NaCl et en particulier une matière fondue de Na₂SO₄-NaCl composée en un mélange eutectique ou une matière fondue de Na₂CO₃-NaCl composée en un mélange eutectique.

11. Procédé selon l'une des revendications 7 à 10, **caractérisé en ce qu'**au moins un composant, en particulier choisi parmi des roues dentées, des pièces de transmission, des éléments d'axe ou des éléments d'entraînement, est intégré par liaison par complémentarité de forme dans le noyau de sel de telle sorte que l'au moins un composant est entouré en grande partie du noyau de sel de telle sorte qu'il ne se produit pas de coulage ultérieur du composant avec fusion ni de formation de paillettes lors du coulage du noyau de sel.

12. Procédé selon l'une des revendications 7 à 11, **caractérisé en ce que** le noyau de sel fabriqué de manière générative est infiltré avec un sel fondu soluble dans l'eau.
